# EUROPÄISCHE PATENTSCHRIFT

(11) **EP 2 989 283 B1**
(45) Veröffentlichungstag und Bekanntmachung des Hinweises auf die Patenterteilung: **22.11.2017**
(21) Anmeldenummer: 14719187.8
(22) Anmeldetag: 27.03.2014
(51) Int. Cl.: E21B 17/00

(54) **GESTÄNGEROHR**
DRILL PIPE
TIGE DE FORAGE

(30) Priorität: 22.04.2013 AT 3362013
(43) Veröffentlichungstag der Anmeldung: 02.03.2016
(73) Patentinhaber: think and vision GmbH, 8700 Leoben (AT)
(72) Erfinder: LAMIK-THONHAUSER, Bouchra, A-8793 Gai (AT); SCHEIBELMASSER, Anton, A-8054 Graz (AT); KOTOV, Anton, Samara 443066 (RU); FINE, Alexander, A-8700 Leoben (AT); GUTSCHELHOFER, Manfred, A-8665 Langenwang (AT); JUD, Johann, A-8650 Kindberg (AT); AICHINGER, Florian, A-4061 Pasching (AT)
(74) Vertreter: Beer & Partner Patentanwälte KG
(86) Internationale Anmeldenummer: PCT/AT2014/000063
(87) Internationale Veröffentlichungsnummer: WO 2014/172720

(56) Entgegenhaltungen:
- WO-A1-95/17575
- WO-A1-03/001023
- WO-A1-2012/045698
- US-A- 4 012 061
- US-A- 4 953 636
- US-A- 4 997 048
- US-A1- 2008 041 575

## Beschreibung

Die Erfindung betrifft ein Gestängerohr, insbesondere für einen Bohrstrang, mit einem Außen- und einem Innenrohr, einem Muffenverbinder mit einem Innengewinde an einem Ende des Gestängerohres und einem Zapfenverbinder mit einem Außengewinde am dem Muffenverbinder gegenüberliegenden Ende, wobei das Innenrohr im Wesentlichen konzentrisch im Außenrohr angeordnet ist, wobei das Gestängerohr einen Mittelbereich mit einem Innendurchmesser aufweist, wobei das Außenrohr (2) an einem zapfenseitigen Endbereich (7) eine Verdickung der Wandstärke nach innen mit einem gegenüber dem Innendurchmesser des Mittelbereiches (8) kleineren Innendurchmesser aufweist und wobei der Innendurchmesser des Außenrohres (2) an einem muffenseitigen Endbereich (4) gegenüber dem Innendurchmesser des Mittelbereiches (8) im Wesentlichen gleich bleibt.

Bei modernen Bohrungen, beispielsweise nach Erdöl, Erdgas oder zum Erschließen von Geothermik, gibt es bei der Gestaltung der Bohrstränge drei wesentliche Bestrebungen, die miteinander im Konflikt stehen. So ist es wünschenswert, Bohrgestänge mit großen Innendurchmessern zu schaffen, um einen möglichst geringen Druckverlust für die Bohrflüssigkeit (Mud) zu erreichen. Gleichzeitig ist es im Sinne der Sicherheit aber auch der Effizienz wichtig, möglichst präzise über die Bedingungen am Ende des Bohrstranges informiert zu sein. Hierfür werden Messeinrichtungen und Mittel zum möglichst verlustfreien, idealerweise hochfrequenten, Übertragen der Messdaten sowie zum ebenso möglichst verlustfreien Versorgen der Messeinrichtungen mit Energie benötigt. Der für die Elektronik und/oder Verkabelung benötigte Raum geht häufig zu Lasten des Durchsatzes. Diesen beiden Bestrebungen entgegen steht das Bedürfnis nach besonders sicheren und haltbaren Bohrsträngen, da diesem Bedürfnis vor allem größere Wandstärken entsprechen. Bohrstränge mit Gestängerohren mit ineinander liegenden Innen- und Außenrohren sind beispielsweise aus den Veröffentlichungen US 4 953 636 A, WO 95/17575 A1, US 4 012 061 A, WO 2012/045698 A1 und US 2008/0041575 A1 bekannt.

Um die Kriterien der Stabilität und des Durchsatzes zu erfüllen, werden im Stand der Technik die Bereiche des Bohrgestänges, die besonderen Belastungen ausgesetzt sind, wie die Muffen- und Zapfenverbinder, mit denen einzelne Gestängerohre des Bohrstranges verbunden werden, und die Übergänge von diesen zum Mittelbereich der Gestängerohre, massiver gestaltet. Hierzu weisen die Rohre Verdickungen der Wandstärken nach innen (internal upset) und/oder nach außen (external upset) auf. Diese Verdickungen nehmen üblicherweise zum Mittelbereich des Gestängerohres hin gleichmäßig ab, um einen besonders materialschonenden Übergang zwischen dem eher biegsamen Mittelbereich und den steifen Muffen- und Zapfenverbindern zu schaffen. Dieser Kompromiss zwischen Durchsatz und Stabilität berücksichtigt allerdings nicht das Bestreben nach möglichst vielen Informationen zum Zustand der Bohrung.

Ziel der Erfindung ist es daher, ein Gestängerohr zur Verfügung zu stellen, dass Druckverluste minimiert, stabil ist und dabei für eine möglichst verlustfreie Daten- und Energieübertragung geeignet ist.

Gelöst wird diese Aufgabe durch ein Gestängerohr der eingangs genannten Art, das dadurch gekennzeichnet ist, dass das Innenrohr (3) in einem muffenseitigen Endbereich (6) eine Verdickung der Wandstärke nach innen aufweist und dass der Innendurchmesser des Innenrohres (3) im Bereich der muffenseitigen Verdickung nach innen im Wesentlichen dem Innendurchmesser des Außenrohres (2) im Bereich der zapfenseitigen Verdickung nach innen entspricht.

So kann ein Innenrohr, welches an seiner Außenseite eine Verkabelung und/oder Elektronik aufweist, eingebracht werden, wodurch ein geschützter Bereich für die Verkabelung und /oder Elektronik geschaffen wird.

Üblicherweise werden Gestängerohre für Bohrstränge symmetrisch gestaltet. Weist ein Rohr an einem Ende eine Verdickung der Wandstärke nach innen, einen internal upset, auf, dann weist es einen gleichartigen internal upset auch am gegenüberliegenden Ende auf. Ein Gestängerohr, das am zapfenseitigen Endbereich (Pin-Seite) einen internal upset aufweist und am gegenüberliegenden muffenseitigen Endbereich (Box-Seite) keinen internal upset aufweist, ist dem gegenüber vollkommen atypisch. Der Vorteil einer derartigen Konstruktion liegt in der Möglichkeit, das Innenrohr derart zu gestalten, dass es, da es üblicherweise von einer Seite her in das Außenrohr gebracht wird, im Vergleich zu Konstruktionen, die an beiden Seiten eine Verdickung der Wandstärke nach innen aufweisen, mit einem sehr viel größeren Außendurchmesser gestaltet werden kann. Folglich kann auch der Innendurchmesser des Innenrohres erheblich größer gestaltet werden, was sich positiv auf eine Minimierung von Druckverlusten der Bohrflüssigkeit auswirkt.

Erfindungsgemäß weist das Innenrohr in einem muffenseitigen Endbereich eine Verdickung der Wandstärke nach innen auf. Dies ist vorteilhaft, da so zwischen zwei Gestängerohren, die üblicherweise über Box und Pin (d.h. Muffenverbinder und Zapfenverbinder) verbunden werden, um den Bohrstrang zu bilden, ein kontinuierlicher Übergang hergestellt werden kann. Dieser Vorteil wird größer, wenn, wie erfindungsgemäß vorgesehen, der Innendurchmesser des Innenrohres im Bereich der muffenseitigen Verdickung nach innen im Wesentlichen dem Innendurchmesser des Außenrohres im Bereich der zapfenseitigen Verdickung nach innen entspricht.

Gemäß einer weiteren bevorzugten Ausführungsform weist das Außenrohr an beiden Enden eine Verdickung der Wandstärke nach außen auf. Durch diese weitere Erhöhung der Stabilität in Form eines external upset kann der internal upset, also die Verdickung der Wandstärke nach innen, weniger stark ausgeprägt ausgeführt werden, was sich durch den vergrößerten Innendurchmesser nochmals positiv auf den Durchsatz der Bohr-bzw. Spülflüssigkeit auswirkt.

Gemäß einer besonders bevorzugten Ausführungsform der Erfindung weist das Innenrohr wenigstens bereichsweise an seiner Außenseite wenigstens eine Leiterbahn, vorzugsweise zwei Leiterbahnen, auf. Im Stand der Technik werden, wenn ein Innenrohr verwendet wird, Leiterbahnen bzw. Leiter üblicherweise zwischen Innenrohr und Außenrohr angeordnet. Dabei besteht allerdings sowohl bei der Fertigung als auch bei der späteren Verwendung des Gestängerohres in einem Bohrstrang das Risiko, dass die Leiter durch Vibration, Dehnung und andere in einem Bohrumfeld übliche Umwelteinflüsse beschädigt werden. Werden die Leiter hingegen am Innenrohr direkt angeordnet, vorzugsweise in Form von auf das Innenrohr aufgedampften oder in das Innenrohr eingebetteten Flachleitern, sind diese durch das Innenrohr wesentlich besser geschützt.

Dieser Effekt wird noch verstärkt, wenn, wie gemäß einer bevorzugten Ausführungsform der Erfindung vorgeschlagen, das Innenrohr wenigstens bereichsweise zum Außenrohr beabstandet ist und dabei einen ringförmigen Hohlraum bildet. Bevorzugt erstreckt sich dieser Hohlraum im Wesentlichen über den gesamten Mittelbereich des Rohres, also über die Abschnitte, in welchen sich keine Gewindestücke oder Verdickungen bzw. upsets befinden. Dadurch sind die Leiter über einen wesentlichen Teil ihres Verlaufs vom Außenrohr entkoppelt und so weniger potentiell schädlichen Umwelteinflüssen ausgesetzt. Hierfür sind wenige Millimeter ausreichend. Die Beabstandung hat daher keinen wesentlichen Einfluss auf die Innenraumgeometrie und Steifigkeit des Gestängerohres an sich.

Der Hohlraum kann dabei einen zusätzlichen Mehrwert erhalten, indem er, wie gemäß weiterer bevorzugter Ausführungsformen der Erfindung, ein Füllmaterial, Datenträger und/oder Sensoren beinhaltet. So können beispielsweise Silikonöle oder Luft den Auftrieb verbessern, während Sand, Gummi, Granulate, Polymere, Harze oder auch Faserverbundstoffe Schwingungen des Bohrgestänges dämpfen können. Datenträger können Informationen über die Identität des Gestängerohres, seine letzte Wartung und dergleichen tragen oder von Sensoren erfasste Daten, wie beispielsweise Druck, Vibration oder Temperatur, aufzeichnen. Hierzu ist es sinnvoll, wenn der oder die Datenträger oder der Sensor bzw. die Sensoren mit den Leitern wenigstens zeitweise verbunden sind, um auch im zusammengebauten Zustand des Gestängerohres ausgelesen werden zu können.

Für alle Anwendungen und Konstruktionen des Hohlraums ist es besonders bevorzugt, wenn dieser gegenüber der Umgebung und dem Innenraum des Gestängerohres abgedichtet ist. Eine vollkommen druck-, wasser-, staub- und explosionsgeschützte Abdichtung ist dabei besonders bevorzugt.

Ein Ausführungsbeispiel der Erfindung wird im Folgenden anhand der Zeichnung näher erläutert. Es zeigt:
- Fig. 1: eine stark vereinfachte Skizze eines erfindungsgemäßen Gestängerohres,
- Fig. 2: ein erstes Detail von Fig. 1 und
- Fig. 3: ein zweites Detail von Fig. 1.

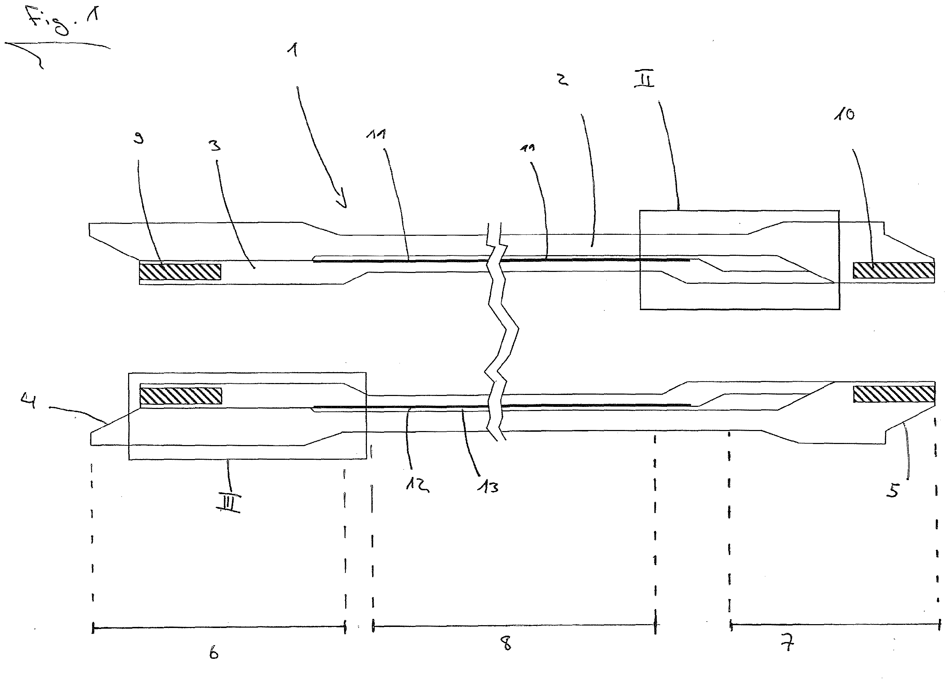

Die Fig. 1 zeigt eine stark vereinfachte Skizze eines erfindungsgemäßen Gestängerohres 1 mit einem Außenrohr 2 und einem Innenrohr 3. Das Gestängerohr hat auf an sich bekannte Weise einen Muffenverbinder 4 mit einem Innengewinde (nicht dargestellt) und einen Zapfenverbinder 5 mit einem Außengewinde(nicht dargestellt). Dabei bildet ein muffenseitiger Endbereich den Box-Bereich 6 und ein zapfenseitiger Endbereich den Pin-Bereich 7. Zwischen diesen beiden erstreckt sich ein Mittelbereich 8. Der Pin-Bereich 7, der Mittelbereich 8 und der Box-Bereich 6 können integral, also einstückig, oder mehrteilig gefertigt werden, beispielsweise verschweißt (z.B. durch Reibschweißen), verklebt oder verschraubt werden.

Die dargestellte Wandstärke des Innenrohres 3 dient dabei lediglich der Veranschaulichung. In der Realität wird angestrebt, dass der Unterschied zwischen dem Innendurchmesser des Außenrohres 2 und dem Innendurchmesser des Innenrohres 3 möglichst gering ist. Bevorzugt weicht der Innendurchmesser des Innenrohres 3 nur gering, vorzugsweise nicht mehr als 10%, vom Innendurchmesser des Außenrohres 2 ab.

Muffen- und Zapfenverbinder 4, 5 weisen in dieser Ausführungsform jeweils eine Vorrichtung 9, 10 zum Herstellen einer galvanisch leitenden Verbindung zum jeweils benachbarten Gestängerohr 1 des Bohrstranges auf. Wie eine solche Vorrichtung gestaltet sein kann, ist beispielsweise in der AT 508 272 B1 offenbart. Weiters weist das Innenrohr in der dargestellten Ausführungsform zwei Leiterbahnen 11, 12 auf, welche in dieser Ausführungsform in das Innenrohr 3 eingebettet sind. Zwischen Außenrohr 2 und Innenrohr 3 befindet sich ein Hohlraum 13.

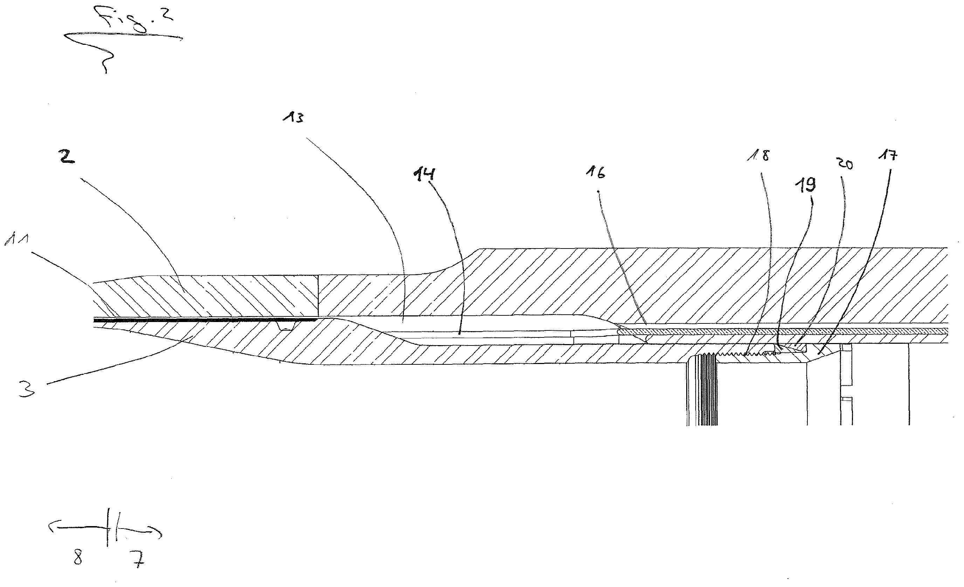

Die Fig. 2 zeigt ein erstes Detail von Fig. 1 im Bereich des Übergangs vom Mittelbereich 8 zum Pin-Bereich 7. Die Leiterbahn 11 an der Außenseite des Innenrohres 3 ist mit einem Leiter 14, der durch den in diesem Bereich vergrößerten Hohlraum 13 und in einem separaten Leiterkanal 16 weiter zur Vorrichtung 10 zum Herstellen einer galvanisch leitenden Verbindung mit einem nachfolgenden Gestängerohr verläuft.

Weiters zeigt die Fig. 2 einen Montagering 17. Dieser ist in der dargestellten Ausführungsform kraftschlüssig mit dem Außenrohr 2 verbunden. Ausführungsformen, bei denen der Montagering 17 anders, beispielsweise stoffschlüssig durch Schweißen, mit dem Außenrohr 2 verbunden ist, sind ebenso denkbar. Der Montagering 17 weist ein Gewinde 18 auf. Über dieses Gewinde 18 kann das Innenrohr 3, nachdem es von der Box-Seite aus in das Außenrohr 2 gebracht wurde, mittelbar mit dem Außenrohr 2 verbunden und gegenüber dem Außenrohr 2 positioniert werden. Vorteilhaft an einer solchen mittelbaren Verbindung zwischen Außen- und Innenrohr 2, 3 ist die einfache Montage der Verkabelung vor dem Verbinden. Außerdem kann das Gestängerohr so, beispielsweise für Wartungsarbeiten, wieder einfach demontiert werden. Zum Schutz des Hohlraumes 13 bzw. zum Schutz von im Hohlraum 13 befindlichen Bauteilen sind Klemmringe 19, 20 vorgesehen, die den Hohlraum gegenüber der Gestängerohrumgebung und dem Innenraum des Gestängerohres 1 abdichten.

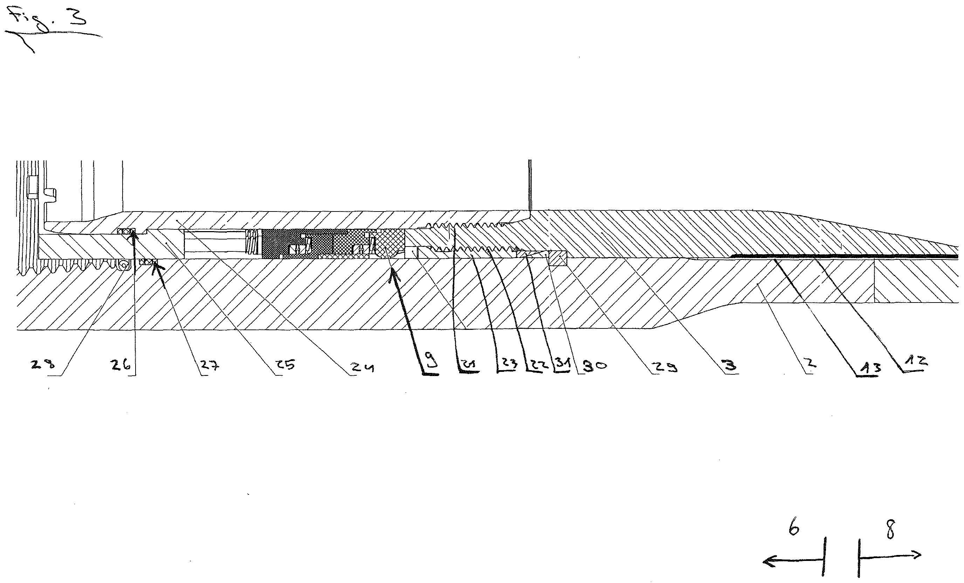

Die Fig. 3 zeigt ein zweites Detail von Fig. 1 im Bereich des Übergangs vom Mittelbereich 8 zum Box-Bereich 6. Die Vorrichtung 9 zum Herstellen einer galvanisch leitenden Verbindung ist dabei direkt am Innenrohr 3 angeordnet. An die Leiterbahn 12 schließt ein im Inneren des Innenrohres 3 geführter Leiter (nicht dargestellt) an, der zur Vorrichtung 9 führt. Das Innenrohr 3 weist an seinem boxseitigen Ende ein Innengewinde 21 und ein Außengewinde 22 auf. Über das Außengewinde 22 wird das Innenrohr 3 über einen zweiten Montagering 23 und Klemmringe 30, 31 analog zum Pin-Bereich 7 kraftschlüssig mit dem Außenrohr 2 verbunden. In das Innengewinde 21 des Innenrohres 3 ist eine Schutzhülse 24 geschraubt. Die Schutzhülse 24 schützt die Vorrichtung 9 zum Herstellen einer galvanisch leitenden Verbindung sowie den Übergang von der Vorrichtung 9 zum Innenrohr 3. Dieser Schutz ist wichtig, da es beim Herstellen einer galvanisch leitenden Verbindung zur Bildung eines Funkens kommen kann. Diese sollte, insbesondere wenn der Bohrstrang für, Öl-, Erdgas- oder geothermische Bohrungen verwendet wird, in jedem Fall in einem gegenüber der Bohrstrangumgebung und dem Bohrstranginneren vollkommen abgedichteten Raum entstehen, da ab einer gewissen Bohrtiefe jederzeit kleinere Gasansammlungen auftreten können, die durch einen Funken zur Explosion gebracht werden könnten. Eine gefederte bewegliche Druckplatte 25 schützt die Vorrichtung 9 zur Box-Seite hin. Zur Stirnseite des Gestängerohres 1 hin ist die Vorrichtung 9 durch eine innere Dichtungsgruppe 26 zwischen Schutzhülse 24 und Druckplatte 25 und eine äußere Dichtungsgruppe 27 zwischen Druckplatte 25 und Außenrohr 2 abgedichtet. Zusätzlich befindet sich zwischen dem Schutzring 25 und dem Außenrohr 2 ein O-Ring 28, als Kompressionskörper zum Druckausgleich gegen Restflüssigkeit. Zum Hohlraum 13 hin wird die Vorrichtung 9 durch die zwei Klemmringe 30, 31, die zwischen einem Anschlag 29 und dem Montagering 23 geklemmt sind, abgedichtet. Beide dichten gleichzeitig den Hohlraum 13 selbst ab.

## Patentansprüche

1. Gestängerohr (1), insbesondere für einen Bohrstrang, mit einem Außenrohr (2) und einem Innenrohr (3), einem Muffenverbinder (4) mit einem Innengewinde an einem Ende des Gestängerohres (1) und einem Zapfenverbinder (5) mit einem Außengewinde am dem Muffenverbinder (4) gegenüberliegenden Ende, wobei das Innenrohr (3) im Wesentlichen konzentrisch im Außenrohr (2) angeordnet ist, wobei das Gestängerohr (1) einen Mittelbereich (8) mit einem Innendurchmesser aufweist, wobei das Außenrohr (2) an einem zapfenseitigen Endbereich (7) eine Verdickung der Wandstärke nach innen mit einem gegenüber dem Innendurchmesser des Mittelbereiches (8) kleineren Innendurchmesser aufweist und wobei der Innendurchmesser des Außenrohres (2) an einem muffenseitigen Endbereich (4) gegenüber dem Innendurchmesser des Mittelbereiches (8) im Wesentlichen gleich bleibt, **dadurch gekennzeichnet, dass** das Innenrohr (3) in einem muffenseitigen Endbereich (6) eine Verdickung der Wandstärke nach innen aufweist und dass der Innendurchmesser des Innenrohres (3) im Bereich der muffenseitigen Verdickung nach innen im Wesentlichen dem Innendurchmesser des Außenrohres (2) im Bereich der zapfenseitigen Verdickung nach innen entspricht.

2. Gestängerohr (1) nach Anspruch 1, **dadurch gekennzeichnet, dass** das Außenrohr (2) an beiden Enden eine Verdickung der Wandstärke nach außen aufweist.

3. Gestängerohr (1) nach Anspruch 1 oder 2, **dadurch gekennzeichnet, dass** das Innenrohr (3) wenigstens bereichsweise an seiner Außenseite wenigstens eine Leiterbahn (11, 12), vorzugsweise zwei Leiterbahnen (11, 12), aufweist.

4. Gestängerohr (1) nach einem der Ansprüche 1 bis 3,
**dadurch gekennzeichnet, dass** das Innenrohr (3) wenigstens bereichsweise zum Außenrohr (2) beabstandet ist und dabei einen ringförmigen Hohlraum (13) bildet.

5. Gestängerohr (1) nach Anspruch 4, **dadurch gekennzeichnet, dass** sich im Hohlraum (13) ein Füllmaterial befindet.

6. Gestängerohr (1) nach einem der Ansprüche 4 oder 5,
**dadurch gekennzeichnet, dass** sich im Hohlraum (13) ein Datenträger befindet.

7. Gestängerohr (1) nach einem der Ansprüche 4 bis 6,
**dadurch gekennzeichnet, dass** sich im Hohlraum (13) wenigstens ein Sensor befindet.

8. Gestängerohr (1) nach einem der Ansprüche 4 bis 7,
**dadurch gekennzeichnet, dass** der Hohlraum (13) gegenüber der Umgebung und dem Innenraum des Gestängerohres (1) abgedichtet ist.

## Claims

1. Drill pipe (1), in particular for a drill string, with an outer pipe (2) and an inner pipe (3), a female connector (4) with an internal thread on one end of the drill pipe (1) and a male connector (5) with an external thread on the end opposite to the female connector (4), whereby the inner pipe (3) is arranged essentially concentrically in the outer pipe (2) and whereby the drill pipe (1) has a center region (8) with an inner diameter, wherein the outer pipe (2) has a thickening of the wall thickness inward with a smaller inner diameter on an end region (7) on the male side relative to the inner diameter of the center region (8) and wherein the inner diameter of the outer pipe (2) remains essentially the same on an end region (4) on the female side relative to the inner diameter of the center region (8), **characterized in that** the inner pipe (3) has a thickening of the wall thickness inward in an end region (6) on the female side and **in that** the inner diameter of the inner pipe (3) in the region of the thickening inward on the female side essentially corresponds to the inner diameter of the outer pipe (2) in the region of the thickening inward on the male side.

2. Drill pipe (1) according to claim 1, wherein the outer pipe (2) on both ends has a thickening of the wall thickness outward.

3. Drill pipe (1) according to one of claims 1 or 2, wherein the inner pipe (3) at least in places on its outer side has at least one strip conductor (11, 12), preferably two strip conductors (11, 12).

4. Drill pipe (1) according to one of claims 1 to 3, wherein the inner pipe (3) is separated from the outer pipe (2) at least in places and thereby forms a ring-shaped cavity (13).

5. Drill pipe (1) according to claim 4, wherein a filler is located in the cavity (13).

6. Drill pipe (1) according to one of claims 4 or 5,
wherein a data medium is located in the cavity (13).

7. Drill pipe (1) according to one of claims 4 to 6,
wherein at least one sensor is located in the cavity (13).

8. Drill pipe (1) according to one of claims 4 to 7,
wherein the cavity (13) is sealed relative to the environment and the interior space of the drill pipe (1).

## Revendications

1. Tige de forage (1), en particulier pour un train de tiges, comprenant un tube extérieur (2) et un tube intérieur (3), un raccord à manchon (4) muni d'un filetage intérieur à une extrémité de la tige de forage (1), et un raccord à tenon (5) muni d'un filetage extérieur à l'extrémité opposée au raccord à manchon (4), le tube intérieur (3) étant disposé sensiblement concentriquement dans le tube extérieur (2) et la tige de forage (1) présentant une partie centrale (8) avec un diamètre intérieur, le tube extérieur (2) présentant au niveau d'une partie d'extrémité côté tenon (7) un épaississement de la paroi vers l'intérieur avec un diamètre intérieur plus petit que le diamètre intérieur de la partie centrale (8), et le diamètre intérieur du tube extérieur (2) restant, au niveau d'une partie d'extrémité côté manchon (4), sensiblement égal au diamètre intérieur de la partie centrale (8), **caractérisée en ce que** le tube intérieur (3) présente dans une partie d'extrémité côté manchon (6) un épaississement de la paroi vers l'intérieur et que le diamètre intérieur du tube intérieur (3) au niveau de l'épaississement vers l'intérieur côté manchon correspond sensiblement au diamètre intérieur du tube extérieur (2) au niveau de l'épaississement vers l'intérieur côté tenon.

2. Tige de forage (1) selon la revendication 1, **caractérisée en ce que** le tube extérieur (2) présente aux deux extrémités un épaississement de la paroi vers l'extérieur.

3. Tige de forage (1) selon la revendication 1 ou 2, **caractérisée en ce que** le tube intérieur (3) présente sur son côté extérieur, au moins dans certaines zones, au moins une piste conductrice (11, 12), de préférence deux pistes conductrices (11, 12).

4. Tige de forage (1) selon l'une des revendications 1 à 3, **caractérisée en ce que** le tube intérieur (3) est espacé du tube extérieur (2) au moins dans certaines zones et forme ainsi une cavité annulaire (13).

5. Tige de forage (1) selon la revendication 4, **caractérisée en ce qu'**une matière de remplissage se trouve dans la cavité (13).

6. Tige de forage (1) selon l'une des revendications 4 ou 5, **caractérisée en ce qu'**un support de données se trouve dans la cavité (13).

7. Tige de forage (1) selon l'une des revendications 4 à 6, **caractérisée en ce qu'**au moins un capteur se trouve dans la cavité (13).

8. Tige de forage (1) selon l'une des revendications 4 à 7, **caractérisée en ce que** la cavité (13) est rendue étanche par rapport à l'environnement et à l'intérieur de la tige de forage (1).
